# EUROPÄISCHE PATENTSCHRIFT

(11) **EP 0 842 037 B1**
(45) Veröffentlichungstag und Bekanntmachung des Hinweises auf die Patenterteilung: **24.07.2002**
(21) Anmeldenummer: 97927027.9
(22) Anmeldetag: 22.05.1997
(51) Int. Cl.: B29C 55/02, B29C 47/06, C08J 5/18, B32B 27/32, B32B 27/20

(54) **VERFAHREN ZUR HERSTELLUNG EINER FüLLSTOFFHALTIGEN BEDRUCKBAREN POLYMERFOLIE**
METHOD OF MANUFACTURING FILLER-CONTAINING POLYMER FILM SUITABLE FOR PRINTING ON
PROCEDE DE PRODUCTION D'UN FILM POLYMERE IMPRIMABLE CONTENANT DES MATIERES DE CHARGE

(30) Priorität: 31.05.1996 DE 19622082
(43) Veröffentlichungstag der Anmeldung: 20.05.1998
(73) Patentinhaber: Brückner Maschinenbau GmbH, 83313 Siegsdorf (DE)
(72) Erfinder: ECKART, Ludwig, D-83278 Traunstein (DE); SAHR, Ulrich, D-83278 Traunstein (DE); STOPPERKA, Klaus, D-06849 Dessau (DE); SCHWUCHOW, Rainer, D-83355 Grabenstätt (DE)
(74) Vertreter: Flach, Dieter Dipl.-Phys.
(86) Internationale Anmeldenummer: EP9702629
(87) Internationale Veröffentlichungsnummer: WO9746367

(56) Entgegenhaltungen:
- EP-A- 0 408 971
- DE-A- 1 494 187
- DE-A- 2 458 822
- DE-A- 2 528 563
- DE-A- 2 740 237
- US-A- 5 552 011

## Beschreibung

Die Erfindung betrifft ein Verfahren zur direkten Herstellung einer füllstoff- bzw. pigmenthaltigen bedruckbaren ein- oder mehrlagigen, biaxial orientierten Polymerfolie, insbesondere auf der Basis von Polypropylen, mit einer Dicke bis zu 250 µm.

Folien, die durch hohe Anteile an Füllstoffen und/oder Pigmenten sowie durch eine gezielte Erzeugung von mikroskopischen Vakuolen in der Folie opak und außerdem beschreib- und bedruckbar sind, werden auch als "synthetische Papiere" bezeichnet. Der Begriff "synthetisches Papier" wird fachsprachlich außerdem auch noch für nach den traditionellen Verfahren der Papierherstellung unter Verwendung von Faserstoffen aus synthetischen Materialien hergestellte Papiere verwendet, um die es jedoch in der vorliegenden Anmeldung nicht geht. Folienartiges "synthetisches Papier" im Sinne der vorliegenden Anmeldung wird im Hinblick auf den End-verwendungszweck in Form relativ dicker Folien benötigt, wobei die derzeit üblichen Produktionsqualitäten Dicken im Bereich von 60 bis 250 µm aufweisen. Folienartiges "synthetisches Papier" basiert in der Regel auf Polypropylen als folienbildendes Polymer, weshalb die nachfolgenden Erläuterungen insbesondere auf Polypropylenfolien Bezug nehmen. "Polypropylen" im Sinne der vorliegenden Patentanmeldung ist dabei ein kristallisierbares taktisches Polypropylen, insbesondere ein isotaktisches, homopolymeres Polypropylen, der Begriff schließt jedoch auch eine Verwendung oder Mitverwendung von syndiotaktischem Polypropylen und Copolymeren ein, die zum überwiegenden Anteil aus Propyleneinheiten bestehen und ggf. bis hinauf zu 15 Gew.-% an anderen Olefinen wie Ethylen und α-Olefinen mit 4 - 8 Kohlenstoffatomen enthalten können, insbesondere für Deckschichten, die durch Coextrusion gebildet werden. Soweit die Lehren der vorliegenden Erfindung ferner auch auf andere Polymere übertragbar sind, was der Fachmann aufgrund seines Fachwissens im Einzelfall beurteilen kann, erfaßt die Lehre der vorliegenden Erfindung in ihren allgemeineren Aspekten auch andere Polymere als Polypropylen.

"Synthetisches Papier" auf der Basis von Polypropylen wird derzeit grundsätzlich nach Verfahren und unter Verwendung von Anlagen hergestellt, wie sie für die Herstellung von Polypropylenfolien für andere Verwendungszwecke üblich sind, z.B. für die Herstellung transparenter Polypropylenfolien. Da biaxial verstreckte Polypropylenfolien für andere Einsatzzwecke jedoch üblicherweise mit geringeren Dicken benötigt und hergestellt werden als "synthetisches Papier", ist es zur Herstellung von "synthetischem Papier" größerer Dicke erforderlich, im Anschluß an die vorausgehende übliche Herstellung von Polypropylenfolien die endgültigen Folienstärken durch nachgeschaltete Kaschierschritte, d.h. die Verbindung mehrerer Folienlagen, zu erzeugen. Das ist arbeits- und kostenaufwendig, wurde jedoch bisher als unumgänglich angesehen.

Das auch zur Herstellung von hoch füllstoff- und pigmenthaltigen Polypropylenfolien, wie sie die Grundlage folienartiger "synthetischer Papiere" des Standes der Technik bilden, angewandte Verfahren zur Herstellung von Polypropylenfolien umfaßt die folgenden grundsätzlichen Schritte:

Es wird eine Schmelze des folienbildenden Polymeren, dem ggf. Additive zur Verbesserung der Verarbeitung oder Handhabung der fertigen Folie zugesetzt sind, hergestellt, und die Schmelze wird im Falle der Herstellung einer einlagigen Folie durch eine einzige Breitschlitzdüse extrudiert. Im Falle der Herstellung einer mehrlagigen Folie erfolgt eine Koextrusion durch zwei oder mehr Breitschlitzdüsen. Wenn eine füllstoff- und pigmenthaltige Folie gewünscht wird, werden in die Schmelze auf an sich bekannte Weise auch die Füllstoffe und/oder Pigmente eingearbeitet, wobei häufig von einem Ausgangsgemisch von pigment- bzw. füllstoffhaltigen Granulaten (sogenannten Masterbatches) mit reinen Polymergranulaten ausgegangen wird.

Bei einer alternativen Vorgehensweise, der sogenannten "Direktadditivierung", wie sie in der deutschen Patentanmeldung 196 04 637.8 beschrieben wird, wird auf den Einsatz von Masterbatches verzichtet. Es werden vielmehr die Pigmente, insbesondere die nachfolgend beschriebenen Pigmente bzw. Füllstoffe in oberflächenbehandelter Form, der Schmelze in einem Doppelschneckenextruder zugesetzt und während der Extrusion entgast sowie homogenisiert.

Als Füllstoffe bzw. Pigmente werden feinteilige Pulver anorganischer Materialien wie SiO₂, Calciumcarbonat, Dolomit, Titandioxid, Kaolin, Talk, Bariumsulfat, Zinksulfid, Lithopone oder Gemische davon verwendet, die alle auch im Rahmen der vorliegenden Erfindung verwendbar sind. Die Begriffe "Füllstoffe" und "Pigmente" werden dabei in der vorliegenden Anmeldung in der Regel austauschbar benutzt und bezeichnen im wesentlichen die gleichen Bestandteile, auch wenn der Fachmann im Einzelfalle die spezielle Materialauswahl unter Berücksichtigung besonderer Teilcheneigenschaften treffen kann.

Die Schmelze wird durch die Breitschlitzdüse(n) unter Erzeugung eines sogenannten "Cast-Films" auf eine Kühlrolle ("Chill-Roll") extrudiert, auf der die Folie durch relativ starke, plötzliche Abkühlung erstarrt. Die Abkühlung wird beispielsweise im Falle der Herstellung von Polypropylenfolien dadurch bewirkt, daß man die Kühlwalze in Verbindung mit einem Wasserbad verwendet und die Folie anschließend zur Herstellung der eigentlichen Primärfolie für die nachfolgende weitere Verarbeitung mit Luft kühlt, wobei die Temperatur der Folie bis auf etwa 70°C abgesenkt wird. Die so erhaltene abgeschreckte Folie muß nunmehr jedoch für die nachfolgende biaxiale Verstreckung in einen Zustand gebracht werden, in dem sie den erforderlichen Kristallisationsgrad sowie die für die nachfolgende Verstreckung erforderliche Temperatur aufweist. Das geschieht bei dem traditionellen Verfahren und bei Verwendung des traditionellen, durch Polymerisation unter Verwendung von Ziegler-Natta-Katalysatoren hergestellten Polypropylens dadurch, daß man die vorher abgekühlte Folie wieder auf die Verstreckungstemperatur erhitzt, die in der Größenordnung von mindestens 120°C liegt. Bei Verwendung eines Polypropylens, das durch Polymerisation unter Verwendung von Metallocen-Katalysatoren hergestellt wurde, können niedrigere Vertsreckungstemperaturen im Bereich von 110 - 115°C angewandt werden. Da Polypropylen, insbesondere ein homopolymeres isotaktisches Polypropylen, relativ gut kristallisiert, so daß ein Kristallisationsgrad in der Größenordnung von 65% und mehr erreicht werden kann, andererseits jedoch die Kristallisationsgeschwindigkeit von Polypropylen relativ niedrig ist (Kristallitwachstum, ohne Nukleirung, in der Größenordnung von 0,33 µm/s), muß man der wiedererwärmten Folie ausreichend Zeit geben, um den für die nachfolgende Verstreckung erforderlichen Kristallisationsgrad zu erreichen. Das geschieht dadurch, daß man die Folie vor der Verstreckung über mehrere Temperierwalzen führt, auf denen es neben der Kristallisation der Folie auch zu einem Temperatur- und Spannungsausgleich innerhalb der Folie kommt. Naturgemäß dauern diese Vorgänge umso länger, je dicker die jeweilige Primärfolie ist, was dazu führt, daß, anlagen- und verfahrensbedingt, praktische Obergrenzen für die mögliche Dicke der Primärfolie existieren. Das ist einer der Gründe, weshalb man bisher zur Erzeugung dicker "synthetischer Papiere" auf ein nachfolgendes Kaschieren zurückgreifen mußte.

Das Verfahren zur Herstellung einer Polypropylenfolie wird dadurch abgeschlossen, daß man die Primärfolie auf an sich bekannte Weise entweder biaxial sequentiell nacheinander in Längsrichtung und Querrichtung oder simultan gleichzeitig in beide Richtungen verstreckt und die gebildete ein- oder mehrlagige biaxial orientierte Polypropylenfolie nach dem Abkühlen gewinnt, indem man sie normalerweise zu einer Rolle aufwickelt. Der hier pauschal als "Abkühlen" bezeichnete Vorgang dient dabei nicht nur der Senkung der Folientemperatur, sondern auch der Thermofixierung ihres inneren Gefüges sowie dem Spannungsausgleich durch Tempern.

Das traditionelle Verfahren hat im Falle der Herstellung von füllstoff- und pigmenthaltigen biaxial orientierten Polypropylenfolien eine Reihe von Nachteilen:

Ein grundsätzlicher Nachteil ist es, daß nach dem traditionellen Verfahren "synthetische Papiere" im Dickenbereich von 60 bis 250 µm nicht direkt in einem Herstellungsschritt von der Schmelze bis zur fertigen biaxial orientierten Folie herstellbar sind. Ein weiterer Nachteil des traditionellen Verfahrens liegt in einem relativ hohen Energiebedarf, der dadurch erhöht wird, daß das Abschrekken des Cast-Films und die anschließende Wiedererwärmung als "Energievernichtung" sehr energieaufwendig sind. Auch der erforderliche Kaschierschritt ist nicht nur arbeitsaufwendig, sondern erfordert neben zusätzlichen Investitionen einen neuerlichen Energieeinsatz.

"Synthetische Papiere" auf Polypropylenbasis des Standes der Technik weisen ferner gelegentlich auch noch den Nachteil auf, daß die Füllstoff- und Pigmentteilchen in der Oberfläche der Folie nicht sehr fest in die Polymermatrix eingebunden sind, was sich als sogenanntes "Auskreiden" äußern kann. Obwohl die Füllstoff- und Pigmentteilchen für die Bedruck- und Beschreibbarkeit der Folie ausschläggebend sind und eine Korrelation zwischen ihrer Menge und der Druckqualität besteht, ist somit dem Füllstoff- und Pigmentanteil bei den herkömmlichen "synthetischen Papieren" auf Polypropylenbasis eine gewisse praktische Obergrenze gesetzt.

Zum Stand der Technik wird insbesondere auch noch verwiesen auf die EP 0 004 633 B2, EP 0 220 433 B1 und die FR-A-2 276 349 sowie die darin als Stand der Technik zitierten Literaturstellen.

Aus der DE-A-44 13 363 ist ferner der Vorschlag bekannt, bei der Herstellung einer monoaxial orientierten Polypropylenfolie ohne Füllstoffgehalt das Verstrecken, anders als bei der üblichen Arbeitsweise, so durchzuführen, daß man die gegossene Folie auf der Kühlwalze nur bis auf den Kristallisationstemperaturbereich abkühlt und dann direkt verstreckt. Aufgrund der relativ geringen Kristallisationsgeschwindigkeit einer Polypropylenfolie dürfte das Verfahren jedoch unter praktischen Bedingungen bestenfalls bei einer sehr geringen Foliengeschwindigkeit bzw. -dicke durchführbar sein.

Angesichts der geschilderten Nachteile des Standes der Technik ist es Aufgabe der vorliegenden Erfindung, ein Verfahren zur Herstellung einer füllstoff- und/oder pigmenthaltigen bedruckbaren ein- oder mehrlagigen, biaxial orientierten Polymerfolie, insbesondere Polypropylenfolie, zu schaffen, das die Herstellung einer solchen Folie mit einer Dicke bis 250 µm direkt ohne Kaschierung ermöglicht und das sich außerdem dadurch auszeichnet, daß es einen verminderten Energiebedarf aufweist und die Herstellung eines hochwertigen "synthetischen Papiers" mit hohem Füllstoff- und/oder Pigmentanteil wenigstens in der zu bedruckenden oder zu beschreibenden Oberflächenschicht ermöglicht.

Diese Aufgabe wird bei einem Verfahren, das die an sich bekannten Verfahrensschritte gemäß Oberbegriff von Patentanspruch 1 umfaßt, erfindungsgemäß dadurch gelöst, daß man die Temperatur der Primärfolie im Bereich zwischen der Erstarrungstemperatur und der für die Verstreckung erforderlichen Temperatur auf eine solche Weise steuert bzw. regelt, daß die Primärfolie nie auf eine Temperatur unter der für die Verstreckung erforderlichen Temperatur abgekühlt wird und die Zeitspanne zwischen der Erstarrung und der Verstreckung so gewählt wird, daß die Kristallisation des folienbildenden Polymeren zwischen den eingelagerten Füllstoff- und Pigmentteilchen vor der Verstreckung im wesentlichen abgeschlossen ist.

Vorteilhafte apparative Ausgestaltungen dieses Grundverfahrens sind in den Unteransprüchen 2 und 3 wiedergegeben, und bevorzugte Ausgestaltungen des erfindungsgemäßen Verfahrens im Hinblick auf die Herstellung von Folien auf der Basis von Polypropylen sind den Unteransprüchen 4 bis 9 zu entnehmen.

Nachfolgend wird die vorliegende Erfindung anhand von bevorzugten Ausführungsformen für die anlagentechnische Durchführung sowie die Folienrezepturen unter Bezugnahme auf die Figuren noch näher erläutert, wobei auf den den Figuren entnehmbaren klaren technischen Offenbarungsgehalt ergänzend zu den nachfolgenden Textausführungen ausdrücklich Bezug genommen wird.

Es zeigen:
- Figur 1 :: eine schematische Darstellung einer ersten Ausführungsform des erfindungsgemäßen Verfahrens unter Verwendung eines Walzenstuhls, in Verbindung mit einem zugehörigen Temperaturprofil für die Folientemperatur;
- Figur 2 :: eine gegenüberstellende Diagrammdarstellung des Temperaturverlaufs in einer Folie bei der Herstellung nach dem in Figur 1 gezeigten erfindungsgemäßen Verfahren und nach einem traditionellen Verfahren;
- Figur 3 :: eine schematische Darstellung einer zweiten Ausführungsform des erfindungsgemäßen Verfahrens für geringere Folienstärken unter Verwendung einer Kühlwalze ohne Wasserbad, in Verbindung mit einem zugehörigen Temperaturprofil für die Folientemperatur;

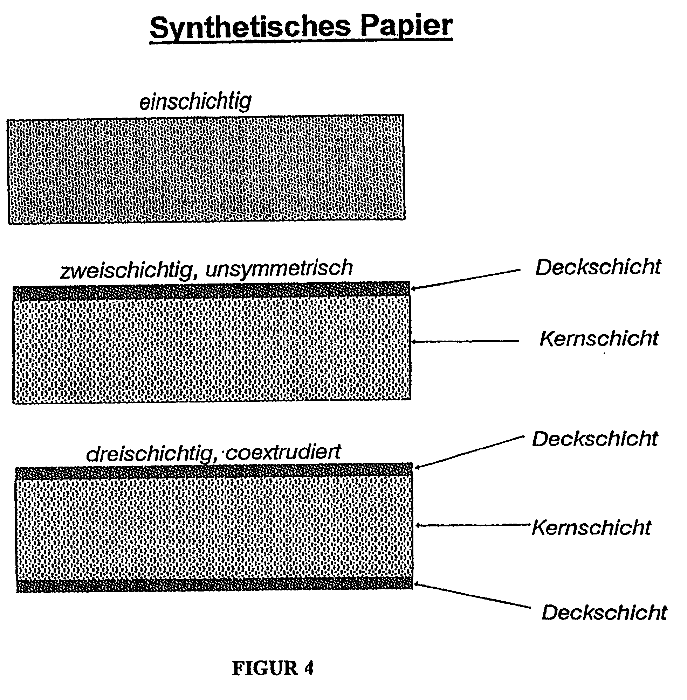

- Figur 4 :: schematische Darstellungen des Grundaufbaus ein-, zwei- und dreilagiger erfindungsgemäßer Folien.

Das erfindungsgemäße Verfahren beruht auf der in dieser Form dem Stand der Technik nicht entnehmbaren Erkenntnis, daß sich füllstoff- und pigmenthaltige Primärfolien, insbesondere Polypropylenfolien, von "normalen", also füllstofffreien Polypropylenfolien in einer Reihe von wesentlichen Eigenschaften so stark unterscheiden, daß unter Einhaltung von praxisnahen verfahrens- und anlagentechnischen Randbedingungen die Folienherstellung nach einem Verfahren möglich ist, das sich von dem traditionellen Verfahren zur Herstellung einer biaxial orientierten Polypropylenfolie in einigen entscheidenden Schritten unterscheidet.

Es zeigte sich nämlich, daß sich die durch die Anwesenheit großer Mengen an Füllstoffen und Pigmenten geänderten inneren Eigenschaften der Primärfolie vorteilhaft in dem Sinne nutzen lassen, daß man eine sehr viel dickere Primärfolie als im Falle des reinen Polypropylens herstellen kann, wenn man gleichzeitig, unter zusätzlicher Energieeinsparung, auf den üblichen Abkühl- und Erwärmungsschritt verzichtet und die Primärfolie kontrolliert "von oben", d.h. von der Erstarrungstemperatur der Schmelze in der Größenordnung von etwa 250°C, direkt allmählich auf eine Temperatur abkühlt, mit der die Primärfolie der ersten Verstreckung zugeführt werden kann, nämlich eine Temperatur von etwa 130 bis 135°C bei Einsatz von Ziegler-Natta-Polypropylen. Bei homopolymeren Polypropylenen, die unter Verwendung von Metallocen-Katalysatoren hergestellt wurden und die einen Kristallitschmelzpunkt von z.B. etwa 145°C aufweisen können, werden die Primärfolien vor Eintritt in den Reckspalt sogar bis auf 110 - 115°C abgekühlt. Indem man vermeidet, daß die Temperatur der Primärfolie vor dem Verstrecken ein Temperaturminimum mit Temperaturen unter der Verstreckungstemperatur durchläuft, werden insbesondere bei der Abschreckung dickerer Folien zu beobachtende innere Spannungen vermieden, es kann zu einem guten Spannungs- und Temperaturausgleich auch innerhalb einer dickeren Folie kommen, und durch die Anwesenheit der Füllstoffteilchen, die als Kristallisationskeime wirken, kommt es nach Erreichen desjenigen Temperaturbereichs, in dem die Folie kristallisiert, zu einer schnellen und vollständigen Kristallisation des Polypropylenpolymeren, so daß die Primärfolie direkt in Längs- und anschließend in Querrichtung oder simultan in beide Richtungen biaxial verstreckt werden kann. Indem man auf die erfindungsgemäße Weise eine verstreckbare Primärfolie einer Dicke von 2,0 bis 6,0 mm verarbeiten kann, kann ein "synthetisches Papier" auf Polypropylenbasis in einer Dicke von 60 bis 250 µm direkt hergestellt werden.

Anlagentechnisch erlaubt das erfindungsgemäße Verfahren den Ersatz der üblichen Kühlwalze ("Chill-Roll") durch einen Walzenstuhl mit temperaturgesteuerten Walzen. Indem die aus der Schmelze erzeugte Primärfolie durch den Spalt eines Walzenstuhls geführt wird, an den sich weitere Walzenspalten zur Kalibrierung der Foliendicke und zum Temperaturausgleich anschließen können, wird die Primärfolie gleichmäßig, ohne daß nennenswerte Temperaturminima durchlaufen und innere Spannungen aufgebaut und fixiert werden, bis auf denjenigen Temperaturbereich abgekühlt, in dem die Folie kristallisiert. Der für die Verstreckung erforderliche Kristallisationsgrad wird in einer relativ kurzen Zeit bzw. bei den üblichen Primärfoliengeschwindigkeiten im Bereich von 30 bis 70 m/min auf einem relativ kurzen Weg, der zu keinerlei Problemen bei der Dimensionierung der Anlage führt, erreicht.

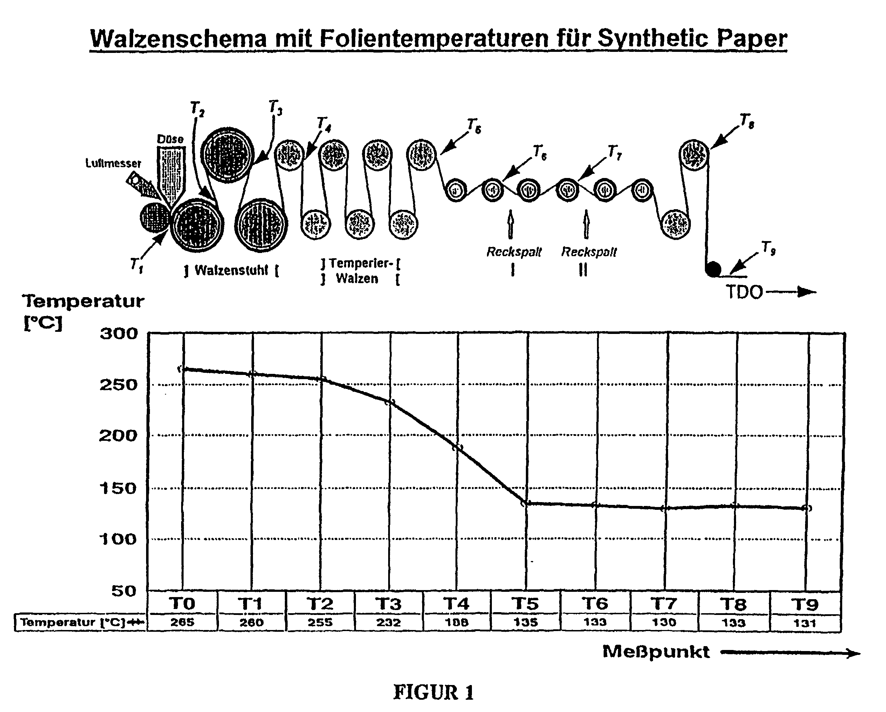

Figur 1 zeigt in schematischer Darstellung die eben geschilderte Verfahrensvariante unter Verwendung eines Walzenstuhls in Verbindung mit einem zugehörigen Temperaturprofil für die Folientemperatur bei Einsatz von Polypropylen, das unter Verwendung von Ziegler-Natta-Katalysatoren hergestellt wurde. Bei Verwendung von Polypropylen, das unter Verwendung von Metallocen-Katalysatoren hergestellt wurde, können die Temperaturen im Bereich T5 bis T9 bis auf 110°C bzw. 115°C abgesenkt werden. Ein Verfahren der gezeigten Art kann beispielsweise so durchgeführt werden, daß man mit einer Primärfolie mit einer Dicke von 5,4 mm und einer Abzugsgeschwindigkeit von 11,5 m/min in die Verstreckung geht und, nach der biaxialen Verstrekkung, eine Endfolie einer Dicke von 0,20 mm mit einer Geschwindigkeit von 53 m/min aufwickelt.

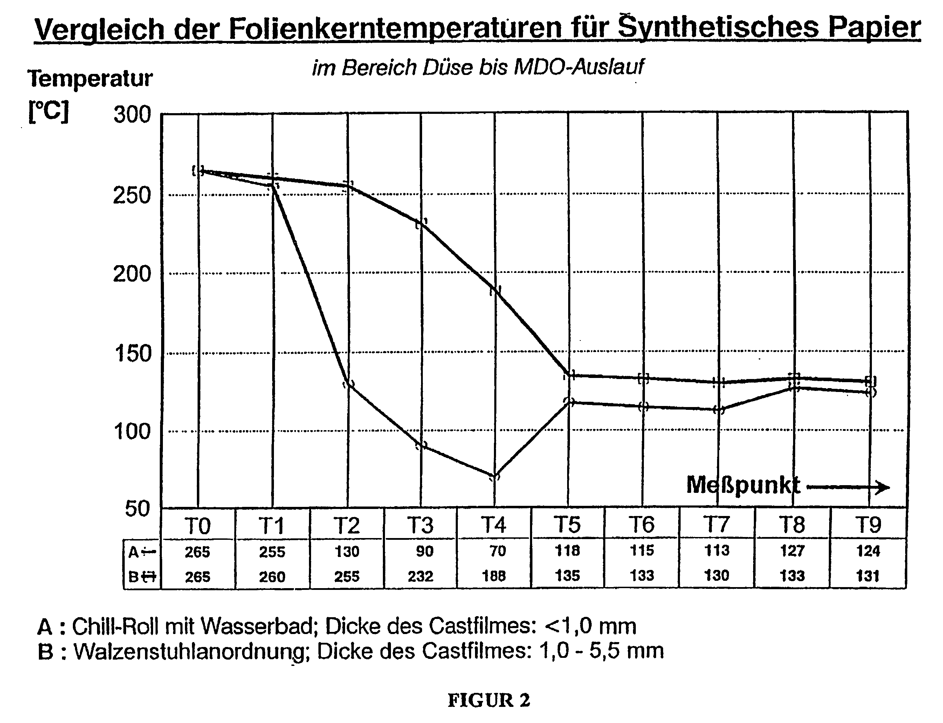

Die Abkühlung "von oben her" kann insbesondere dann, wenn man ein "synthetisches Papier" geringerer Stärken aus dünneren Primärfolien im Stärkebereich von 0,6 bis 2,0 mm durch biaxiale Verstreckung herstellt, apparativ auch dadurch erreicht werden, daß man das traditionelle Verfahren unter Verwendung einer Kühlwalze abwandelt, indem man beispielsweise das Wasserbad wegläßt und die Temperatur der Kühlwalze entsprechend hoch hält, so daß die Folientemperatur bis zum Erreichen der Verstreckungstemperatur von 130 bis 135°C bzw. 110 bis 115°C ebenfalls kein Temperaturminimum durchläuft. Eine derartige Verfahrensvariante ist zusammen mit dem zugehörigen Temperaturprofil für die Folientemperatur in Abbildung 2 gezeigt. Als "Folientemperatur" wird dabei der Wert für das Temperaturprofil über die Foliendicke bezeichnet. Sie ist zu unterscheiden von der sogenannten "Kontakttemperatur", die die Temperatur der Walze bzw. der Luft auf der anderen Seite der Walze bezeichnet. Es ist dabei erkennbar, daß bei dieser Verfahrensvariante eine geringere Anzahl an Temperierwalzen erforderlich ist als beim herkömmlichen Verfahren, damit die Folie mit einer ausreichenden Temperatur in den Reckspalt gelangt. Die Temperatur der Kühlwalze wird für die Durchführung dieser Verfahrensvariante bei den üblichen Cast-Film-Geschwindigkeiten von 30 bis 70 m/min auf eine Temperatur im Bereich von 45 bis 90°C eingestellt, was dazu führt, daß es im Kontakt mit dieser Kühlwalze zu einer Abkühlung der Folie um weniger als 100°C nur bis etwa auf 180°C kommt. Die weitere kontrollierte Abkühlung wird dadurch erreicht, daß man die Folie über temperaturgesteuerte Temperierwalzen führt und die Dicke der Folie überwacht, die im Hinblick auf die Abkühlgeschwindigkeit und den für den inneren Temperatur- und Spannungsausgleich erforderlichen Zeitbedarf von Bedeutung ist.

Das erfindungsgemäße Verfahren beruht auf der Ausnutzung der Tatsache, daß durch die Anwesenheit von Füllstoffen bzw. Pigmenten, die grundsätzlich irgendwelche der oben genannten üblichen Füllstoffe und Pigmente sein können, wobei ein feinteiliges Lithopone, Calciumcarbonat und Titandioxid bevorzugt sind, die Rekristallisationstemperatur gegenüber reinem Polypropylen deutlich erhöht wird.

Indem man durch geeignete Additive die Kristallisationsgeschwindigkeit des Polypropylens zwischen den Füllstoffteilchen möglichst hoch hält, wird zusätzlich sichergestellt, daß der für die Verstreckung erforderliche Kristallisationsgrad schnell erreicht werden kann, ohne daß anlagentechnisch größere Probleme auftreten. Ein Additiv, das sich für die Durchführung des erfindungsgemäßen Verfahrens vorteilhaft auswirkt, ist ein Polypropylenwachs, wenn es in Mengen im Bereich von etwa 5 bis 10 Massen-%, bezogen auf alle folienbildenden Bestandteile, zugesetzt wird. Besonders bevorzugt ist die Verwendung eines relativ hochmolekulargewichtigen Polypropylenwachses ("PP-Wachses") mit einem Molekulargewicht (Gewichtsmittel des Durchschnittsmolekulargewichts M_{w}) von mehr als 8.000 g/mol, insbesondere im Bereich von 12.000 bis 50.000 g/mol. Zwei geeignete, derzeit bevorzugte Typen von Polypropylen-Wachsen sind die nachfolgenden Typen A und B, die die folgenden wesentlichsten Eigenschaften aufweisen:
- Typ A:: homopolymeres Polypropylenwachs
Molmasse M_{w} ca. 36.000 g/mol
Kristallinität: 55,6% (Differential Scanning Calorimetry, DSC)
Kristallinität: 70% (Röntgenanalyse)
Schmelzpunkt Fₘ (DSC): 158 - 162°C
Tropfpunkt (Ubbelohde): 165 - 170°C
Schmelzviskosität (200°C): 800-1200 mm²/s
Kristallisationstemperatur Tᵣₑₖ: 114°C
- Typ B:: homopolymeres Polypropylenwachs
Molmasse M_{w} ca. 17.000 g/mol
Kristallinität: 47,5% (DSC)
Kristallinität: 65% (Röntgenanalyse)
Schmelzpunkt Fₘ (DSC) : 156 - 160°C
Tropfpunkt (Ubbelohde) : 158 - 165°C
Schmelzviskosität (200 °C): 90 - 125 mm²/s
Kristallisationstemperatur Tᵣₑₖ: 110°C

Die Anwesenheit der genannten Polypropylenwachse in der Folie wirkt sich viskositatsvermindernd aus, was sich bezüglich der Benetzung und somit der Einbettung der Pigmentteilchen vorteilhaft auswirkt und eine höhere Beweglichkeit der kristallisierenden Polypropylen-Makromoleküle bewirkt, was unterhalb der Rekristallisationstemperatur von etwa 135°C bzw. etwa 110°C einer höheren Kristallisationsgeschwindigkeit entspricht.

Es ist bekannt, daß es beim biaxialen Verstrecken von füllstoffhaltigem Polypropylen dazu kommt, daß sich innerhalb der Folie, ausgehend von der Grenzfläche Polymer/Füllstoffteilchen, mikroskopische Vakuolen bilden, die die Opazität der Folie erhöhen und in Verbindung mit den Füllstoffteilchen den schließlich erhaltenen opaken Charakter der Folie ausmachen. Diese Vakuolenentstehung ist deshalb möglich, weil die Füllstoff- und Pigmentteilchen in der Polymermatrix relativ schwach eingebunden sind, d.h. nur durch Nebenvalenz- und ggf. Wasserstoffbrücken-Bindungen an die Polymermatrix gebunden sind. So erwünscht die Vakuolenbildung im Folieninneren ist, weist sie im Bereich der Oberfläche doch den Nachteil auf, daß die schwache Einbindung der Füllstoff- und Pigmentteilchen zu einer unzureichenden Oberflächengüte führt, die sich insbesondere in Form eines verstärkten Abriebs ("Auskreidung") äußert. Diesem Nachteil kann erfindungsgemäß dadurch entgegengewirkt werden, daß man die Füllstoffteilchen zusätzlich durch geeignete Zusätze kovalent an die Polymermatrix bindet. Ein geeignetes Additiv für eine Polypropylenfolie ist beispielsweise ein mit Maleinsäureanhydrid gepfropftes Polypropylenwachs ("MSA-PP-Wachs").

Ein geeignetes, derzeit bevorzugtes derartiges MSA-PP-Wachs weist die folgenden Eigenschaften auf:

| | |
|---|---|
| Schmelzpunkt (Differential-Scanning-Calorimetry, DSC) | 155-156°C |
| Tropfpunkt (nach Ubbelohde) | 162-165°C |
| Kugeldruckhärte bei 23°C | 1474-1480 bar |
| Schmelzeviskosität (bei 190°C) | 143-145 mm²/s |
| Gehalt an Maleinsäureanhydrid durchschnittliches Molekulargewicht | 2,0-2,5 Massen-% |
| Gewichtsmittel M_{w} | 19.800 g/mol |
| Zahlenmittel Mₙ | 9.600 |

Der Maleinsäureanhydridteil des gepfropften Polypropylenwachses kann im Sinne einer Säurefunktion mit den Füllstoff- und Pigmentteilchen reagieren und diese kovalent einbinden. Das führt dazu, daß die Haftung der Füllstoffund Pigmentteilchen aufgrund der sehr viel festeren Einbindung stark verbessert wird. Das führt zu einer höheren Abriebfestigkeit, einer verbesserten Oberflächenrauhigkeit, einer besseren Benetzbarkeit der Oberfläche, einem verbesserten Auflösungsvermögen beim Druck und erhöht auch die Biegesteifigkeit der Folie.

Da sich die Vorteile eines Zusatzes eines MSA-PP-Wachses insbesondere in der Oberfläche der Folie auswirken, wird das MSA-PP-Wachs insbesondere denjenigen Polymerlagen zugesetzt, die die bedruck- ur.d beschreibfähigen Oberflächen bilden. Es ist dabei besonders vorteilhaft, das MSA-PP-Wachs einer oder zwei relativ dünnen Deckschichten zuzusetzen, die bei dem erfindungsgemäßen Verfahren durch Koextrusion erzeugt werden können. In einem solchen Falle kann die Kernschicht die erwünschte Fähigkeit zur Vakuolenbildung aufweisen, ohne daß bei der Oberflächengüte Nachteile auftreten. Ein Zusatz des MSA-PP-Wachses kann jedoch auch bei einschichtigen pigmenthaltigen dicken Polypropylenfolien vorteilhaft sein, indem die Oberflächengüte verbessert wird, was sich als eine bessere Bedruckbarkeit auswirken kann, und die höhere Festigkeit der Einbindung der Pigmentteilchen ermöglicht einen höheren Zusatz an Pigmentteilchen, ohne daß gleichzeitig die Abriebfestigkeit nachteilig beeinflußt wird. Durch den höheren Pigmentanteil tritt die Bedeutung der Vakuolen für die Opazität der Folie zurück. Die durch die festere Einbindung der Füllstoffteilchen erhöhte Biegesteifigkeit der Folie kann für bestimmte Anwendungen einen weiteren Vorteil darstellen.

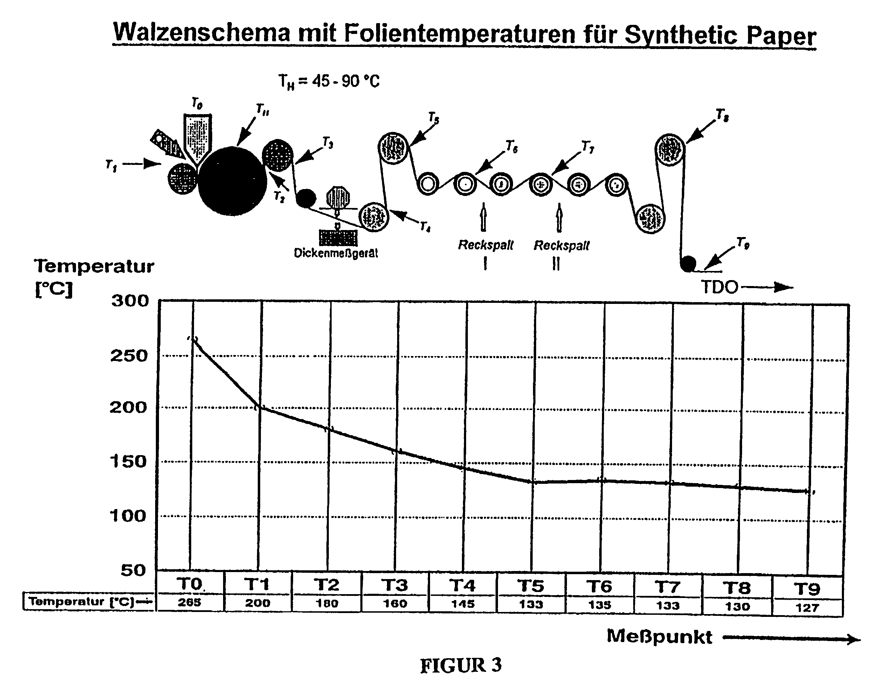

Nachfolgend werden für die Durchführung des erfindungsgemäßen Verfahrens geeignete vorteilhafte Folienrezepturen für einlagige bzw. mehrlagige (zweilagige und dreilagige) Folien, wie sie schematisch in Figur 3 dargestellt sind, beschrieben.

### Beispiel 1

Eine Zusammensetzung für die Herstellung einer einlagigen Folie nach dem erfindungsgemäßen Verfahren enthält:

| | |
|---|---|
| 60,0 | Massen-% isotaktisches Polypropylen mit einem Molekulargewicht (M_{w}) von etwa 300.000 g/mol, |
| 25 | Massen-% CaCO₃, |
| 7,0 | Massen-% TiO₂ |
| 0,5 | Massen-% MSA-PP-Wachs |
| 7,5 | Massen-% PP-Wachs Typ A |

Der Bestandteil CaCO₃ kann dabei auch durch einen gleichen Anteil an z.B. Lithopone ersetzt werden.

Das Calciumcarbonat wurde in Form eines feinen Pulvers mit einer Korngrößenverteilung im Bereich von 0,2 bis 16 µm mit einem Maximum der Korngrößenverteilung bei etwa 3 µm eingesetzt.

Das Titandioxid wies eine Korngröße im Bereich von 0,18 bis 1,8 µm auf, wobei ein Maximum für die Korngrößenverteilung bei ca. 0,5 µm lag.

### Beispiel 2

Zur Herstellung eines Zweilagenfilms mit einer Kernschicht und einer unsymmetrisch angeordneten koextrudierten einzelnen Deckschicht einer Dicke von etwa 10 % der Gesamtfolien wurden folgende Zusammensetzungen verwendet:

| | |
|---|---|
| Kernschicht | 77,5 Massen-% Polypropylen |
| | 15,0 Massen-% Calciumcarbonat (oder Lithopone, BaSO₄ oder Talkum) |
| | 2,5 Massen-% TiO₂ |
| | 5,0 Massen-% PP-Wachs |
| Deckschicht | 57,0 Massen-% Polypropylen |
| | 27,5 Massen-% CaCO₃ (oder Lithopone) |
| | 7,5 Massen-% TiO₂ |
| | 0,5 Massen-% MSA-PP-Wachs |
| | 7,5 Massen-% PP-Wachs |

Unter Verwendung der gleichen Zusammensetzungen für die Kernschicht und die Deckschichten kann auch eine dreilagige koextrudierte Folie mit zwei Deckschichten hergestellt werden, wobei die Deckschichten Dicken aufweisen, die zusammen etwa 6 bis 15 % der Gesamtfolie ausmachen.

## Patentansprüche

1. Verfahren zur Herstellung einer pigmenthaltigen bedruckbaren ein- oder mehrlagigen, biaxial orientierten Polymerfolie, bei dem man
- die Schmelze eines Gemischs oder mehrerer Gemische aus dem oder den folienbildenden Polymeren, Pigmenten sowie ggf. weiteren Additiven durch eine oder mehrere Breitschlitzdüse (n) extrudiert,
- die extrudierte Schmelze folienartig zu einem Cast-Film erstarren läßt und die Temperatur und Dicke der daraus gebildeten Primärfolie so steuert, daß sie einen für die nachfolgende Verstreckung erforderlichen Kristallisationsgrad sowie eine für die nachfolgende Verstreckung geeignete Temperatur erreicht,
- die Primärfolie sequentiell nacheinander oder simultan in Längsrichtung und Querrichtung biaxial verstreckt und
- die gebildete ein- oder mehrlagige biaxial orientierte Folie nach dem Abkühlen gewinnt, **dadurch gekennzeichnet, daß** man die Temperatur der Primärfolie im Bereich zwischen der Erstarrungstemperatur und der für die Verstreckung erforderlichen Temperatur auf eine solche Weise steuert, daß die Primärfolie nie auf eine Temperatur unter der für die Verstreckung erforderlichen Temperatur abgekühlt wird und die Zeitspanne zwischen der Erstarrung und der Verstreckung so gewählt wird, daß die Kristallisation des folienbildenden Polymeren zwischen den eingelagerten Füllstoff- und Pigmentteilchen vor der Verstreckung im wesentlichen abgeschlossen ist.

2. Verfahren nach Anspruch 1, **dadurch gekennzeichnet, daß** man zur Herstellung einer Folie mit einer Dicke im Bereich von 60 bis 250 µm die Temperatur der Primärfolie zwischen ihrer Erstarrung und der Verstreckung dadurch steuert, daß man die Folie durch den Walzenspalt wenigstens eines Walzenstuhls mit beheizten Walzen sowie anschließend ggf. noch über Temperierwalzen führt.

3. Verfahren nach Anspruch 1, **dadurch gekennzeichnet, daß** man zur Herstellung einer Folie einer Dicke bis zu 250 µm die Temperatur der Folie zwischen ihrer Erstarrung und der Verstreckung dadurch steuert, daß man die Folie im Kontakt mit einer üblichen Kühlwalze nur auf eine Temperatur abkühlt, die um 50 bis 80°C über der für die nachfolgende Verstreckung erforderlichen Temperatur liegt.

4. Verfahren nach einem der Ansprüche 1 bis 3, **dadurch gekennzeichnet, daß** das folienbildende Polymer ein Polypropylen-Polymer ist, das von 10 bis 40 Massen-%, bezogen auf die Gesamtheit aller folienbildenden Bestandteile, eines Füllstoffs bzw. Pigments enthält, die aus einer Gruppe ausgewählt sind, die aus feinteiligem Calciumcarbonat, Dolomit, SiO₂, Titandioxid, Kaolin, Talk, Bariumsulfat, Lithopone oder Gemischen davon besteht.

5. Verfahren nach einem der Ansprüche 1 bis 4, **dadurch gekennzeichnet, daß** das Polymer ein kristallisierbares Polypropylen-Homopolymer ist, das als Pigmente Calciumcarbonat und Titandioxid sowie wenigstens ein weiteres Additiv in Form eines Polypropylenwachses in Mengen von 4 bis 8 Massen-%, bezogen auf die Gesamtmasse der Folie oder der jeweiligen Folienlage, enthält, und daß man die Primärfolie so abkühlt, daß sie eine Verstreckungstemperatur von 130-135°C bzw. 110-115°C bei einer Primärfoliengeschwindigkeit im Bereich von 10-70 m/min innerhalb von 1 s bis 100 s erreicht.

6. Verfahren nach einem der Ansprüche 1 bis 5, **dadurch gekennzeichnet, daß** diejenige Lage der Folie, die für ein nachfolgendes Bedrucken vorgesehen ist, als weiteres Additiv ein mit Maleinsäureanhydrid gepfropftes Polyproplyenwachs ("MSA-PP-Wachs") in einer Menge von 0,3 bis 0,8 Massen-%, bezogen auf die Gesamtmasse der Folienlage, die dieses MSA-PP-Wachs enthält, enthält.

7. Verfahren nach einem der Ansprüche 4 bis 6, **dadurch gekennzeichnet, daß** die herzustellende Folie eine einlagige Folie einer Dicke im Bereich von 60 bis 250 µm aus einem kristallisierbaren Polypropylen-Homopolymer ist, das, jeweils bezogen auf das Gesamtgewicht aller Folienbestandteile, 20 bis 35 Massen-% Pigment, 5 bis 10 Massen-% eines isotaktischen Polypropylen-Wachses sowie 0,2 bis 1,0 Massen-% eines mit Maleinsäureanhydrid gepfropften Polypropylenwachses enthält.

8. Verfahren nach einem der Ansprüche 4 bis 6, **dadurch gekennzeichnet, daß** die herzustellende Folie eine zweioder dreilagige Folie einer Dicke im Bereich von 60 bis 250 µm mit einer Kernschicht aus einem kristallisierbaren Polypropylen-Homopolymer, die, bezogen auf das Gesamtgewicht aller die Kernschicht bildenden Folienbestandteile, 12,5 bis 30 Massen-% Pigment und 5 bis 10 Massen-% eines isotaktischen Polypropylen-Wachses enthält, sowie einer oder zwei coextrudierten äußeren, bedruckbaren Deckschicht(en) aus einem kristallisierbaren Polypropylen-Homopolymer ist, die, jeweils bezogen auf das Gesamtgewicht aller die jeweilige Deckschicht bildenden Folienbestandteile, 25 bis 35 Massen-% Pigment, 4 bis 10 Massen-% eines isotaktischen Polypropylen-Wachses sowie 0,2 bis 1,0 Massen-% eines mit Maleinsäureanhydrid gepfropften Polypropylenwachses enthalten, wobei die Dicke der Kernschicht im Bereich von 60 bis 98% der Dicke der gesamten Folie liegt.

9. Verfahren nach Anspruch 5, 7 oder 8, **dadurch gekennzeichnet, daß** das Pigment bzw. der Füllstoff Calciumcarbonat oder Lithopone und/oder Titandioxid ist und das isotaktische Polypropylenwachs ein Gewichtsmittel des Durchschnittsmolekulargewichts M_{w} im Bereich von 12.000 bis 50.000 g/mol aufweist und in Mengen von 5 bis 7,5 Massen-% verwendet wird.

## Claims

1. Process for producing a pigmented, printable, biaxially oriented polymer film having one or more layers, by
- extruding the melt of a mixture or of more than one mixture made from the film-forming polymer(s), pigments, and also other additives if desired, through one or more slot dies,
- allowing the extruded melt to harden in the manner of a film to give a cast film and controlling the temperature and thickness of the resultant primary film in such a manner that it achieves a degree of crystallization required for the subsequent orientation process and also a temperature suitable for the subsequent orientation process,
- biaxially orienting the primary film in longitudinal and transverse directions, either in sequence one after the other or simultaneously
- and, after cooling, obtaining the resultant biaxially oriented film having one or more layers, **characterized in that** the temperature of the primary film is controlled in the range between its solidifying point and the temperature required for the orientation process in such a manner that the primary film is never cooled to a temperature below that required for the orientation process and the interval between the solidification and the orientation process is selected such that the crystallization of the film-forming polymer between the embedded particles of filler and pigment is essentially concluded before the orientation process.

2. Process according to claim 1, **characterized in that**, to produce a film with a thickness in the range from 60 to 250 µm, the temperature of the primary film is controlled between its solidification and the orientation process by virtue of the fact that the film is conducted through the gap of at least one set of rolls with heated rolls and, if desired, is subsequently also conducted over constant-temperature rolls.

3. Process according to claim 1, **characterized in that**, to produce a film of thickness up to 250 µm, the temperature of the film between its solidification and the orientation process is controlled by virtue of the fact that the film is cooled in contact with a conventional cooling roll only to a temperature which is from 50 to 80°C above that required for the subsequent orientation process.

4. Process according to any one of claims 1 to 3, **characterized in that** the film-forming polymer is a propylene polymer which contains from 10 to 40% by weight, based on the total of all film-forming constituents, of a filler and/or pigment selected from a class consisting of finely divided calcium carbonate, dolomite, SiO₂, titanium dioxide, kaolin, talc, barium sulphate, lithopones and mixtures of these.

5. Process according to any one of claims 1 to 4, **characterized in that** the polymer is a crystallizable polypropylene homopolymer which contains, as pigments, calcium carbonate and titanium dioxide, and also at least one other additive in the form of a polypropylene wax in amounts of from 4 to 8% by weight, based on the total weight of the film or of the respective film layer, and **in that** the primary film is cooled in such a manner that it achieves an orientation process temperature of from 130 to 135°C or from 110 to 115°C within a period of from 1 to 100 s at a primary film speed in the range from 10 to 70 m/min.

6. Process according to any one of claims 1 to 5, **characterized in that** the particular layer of the film which is intended for subsequent printing contains, as further additive, a polypropylene wax grafted with maleic anhydride ("MA PP wax") in an amount of from 0.3 to 0.8% by weight, based on the total weight of the film layer which contains this MA PP wax.

7. Process according to any one of claims 4 to 6, **characterized in that** the film to be produced is a single-layer film of thickness from 60 to 250 µm made from a crystallizable polypropylene homopolymer which contains, based in each case on the total weight of all film constituents, from 20 to 35% by weight of pigment, from 5 to 10% by weight of an isotactic polypropylene wax and also from 0.2 to 1.0% by weight of a polypropylene wax grafted with maleic anhydride.

8. Process according to any one of claims 4 to 6, **characterized in that** the film to be produced is a two- or three-layer film of thickness from 60 to 250 µm with a core layer made from a crystallizable polypropylene homopolymer, which layer contains, based on the total weight of all of the film constituents forming the core layer, from 12.5 to 30% by weight of pigment and from 5 to 10% by weight of an isotactic polypropylene wax, and also with one or two coextruded outer, printable top layers made from a crystallizable polypropylene homopolymer, which layers contain, based in each case on the total weight of all of the film constituents forming the respective top layer, from 25 to 35% by weight of pigment, from 4 to 10% by weight of an isotactic polypropylene wax, and also from 0.2 to 1.0% by weight of a polypropylene wax grafted with maleic anhydride, the thickness of the core layer being from 60 to 98% of the thickness of the entire film.

9. Process according to claim 5, 7 or 8, **characterized in that** the pigment and/or the filler is calcium carbonate or lithopones and/or titanium dioxide and the isotactic polypropylene wax has a weight-average molecular weight M_{w} in the range from 12,000 to 50,000 g/mol and is used in amounts of from 5 to 7.5% by weight.

## Revendications

1. Procédé de production d'un film polymère imprimable contenant des pigments, à une ou plusieurs couches et à orientation biaxiale, dans lequel
- on extrude à travers une ou plusieurs filières aplaties la matière en fusion d'un mélange ou de plusieurs mélanges du ou des polymères formant film, des pigments ainsi que, le cas échéant, d'autres additifs,
- on laisse solidifier la matière en fusion extrudée en forme de film pour former un film coulé et on commande la température et l'épaisseur du film primaire qui en est formé de telle sorte qu'il atteint un degré de cristallisation nécessaire pour un étirage consécutif ainsi qu'une température appropriée pour l'étirage consécutif,
- on étire le film primaire biaxialement, par séquence consécutive ou simultanément, en direction longitudinale et en direction transversale, et
- on obtient après le refroidissement le film formé en une ou plusieurs couches, à orientation biaxiale,
**caractérisé en ce qu'**on commande la température du film primaire entre la température de solidification et la température nécessaire pour l'étirage d'une manière telle que le film primaire n'est jamais refroidi à une température inférieure à la température nécessaire pour l'étirage, et **en ce qu'**on choisit le laps de temps entre la solidification et l'étirage de telle manière que la cristallisation du polymère formant le film entre les particules intégrées de matières de charge et de pigments est sensiblement achevée avant l'étirage.

2. Procédé selon la revendication 1, **caractérisé en ce que** pour produire un film avec une épaisseur dans la plage de 60 à 250 µm, on commande la température du film primaire entre sa solidification et l'étirage de telle sorte qu'on fait passer le film à travers l'emprise d'au moins une cage à cylindres avec des cylindres chauffés, et qu'on le fait ensuite passer éventuellement sur des cylindres d'équilibrage de température.

3. Procédé selon la revendication 1, **caractérisé en ce que** pour produire un film d'une épaisseur jusqu'à 250 µm, on commande la température du film entre sa solidification et l'étirage par le fait qu'on refroidit le film au contact avec un cylindre de refroidissement classique seulement à une température qui est d'environ 50 à 80° supérieure à la température nécessaire pour l'étirage consécutif.

4. Procédé selon l'une quelconque des revendications 1 à 3, **caractérisé en ce que** le polymère formant le film est un polymère de polypropylène qui contient de 10 à 40 pour cent en masse, rapportés à la totalité de tous les composants formant le film, d'une matière de charge ou d'un pigment qui sont choisis parmi un groupe constitué par du carbonate de calcium, de la dolomie, du SiO₂, du dioxyde de titane, du kaolin, du talc, du sulfate de baryum, du lithopone ou leurs mélanges, en particules fines.

5. Procédé selon l'une quelconque des revendications 1 à 4, **caractérisé en ce que** le polymère est un homopolymère de polypropylène cristallisable qui contient comme pigments du carbonate de calcium et du dioxyde de titane ainsi qu'au moins un autre additif sous la forme d'une cire de polypropylène en quantité de 4 à 8 % en masse rapportée à la masse totale du film ou de la couche respective de film, et **en ce qu'**on refroidit le film primaire de telle sorte qu'il atteint en 1s et 100s une température d'étirage de 130 à 135°C ou 110 à 115°C respectivement pour une vitesse de film primaire dans la plage de 10 à 70 m/mn.

6. Procédé selon l'une quelconque des revendication 1 à 5, **caractérisé en ce que** celle des couches du film qui est prévue pour une impression consécutive contient comme autre additif une cire de polypropylène chargée d'anhydre d'acide maléique ("Cire-PP-AAM") dans une quantité de 0,3 à 0,8 % en masse rapportée à la masse totale de la couche de film qui contient cette cire-PP-AAM.

7. Procédé selon l'une quelconque des revendications 4 à 6, **caractérisé en ce que** le film à produire est un film monocouche d'une épaisseur dans la plage de 60 à 250 µm en un homopolymère de polypropylène cristallisable qui, rapporté au poids total de tous les composants du film, contient 20 à 35 % en masse de pigment, 5 à 10 % en masse d'une cire de polypropylène isotactique ainsi que 0,2 à 1,0 % en masse d'une cire de polypropylène chargée d'anhydre d'acide maléique.

8. Procédé selon l'une quelconque des revendications 4 à 6, **caractérisé en ce que** le film à produire est un film à deux ou trois couches d'une épaisseur dans la plage de 60 à 250 µm avec une couche centrale en un homopolymère de polypropylène cristallisable qui, rapporté au poids total de tous les composants de la couche centrale, contient 12,5 à 30 % en masse de pigment et 5 à 10 % en masse d'une cire de polypropylène isotactique, ainsi qu'une ou deux couches de recouvrement extérieures coextrudées imprimables en un homopolymère de polypropylène cristallisable qui, rapporté au poids total de tous les composants formant la couche de recouvrement respective, contiennent 25 à 35 % en masse de pigment, 4 à 10 % en masse cire de polypropylène isotactique ainsi que 0,2 à 1,0 % en masse d'une cire de polypropylène chargée d'anhydre d'acide maléique, l'épaisseur de la couche centrale étant dans la plage de 60 à 98 % de l'épaisseur de la totalité du film.

9. Procédé selon la revendication 5, 7 ou 8, **caractérisé en ce que** le pigment ou la matière de charge est un carbonate de calcium ou du lithopone et/ou du dioxyde de titane, et la cire de polypropylène isotactique présente un milieu de lestage de poids moléculaire moyen M_{w} dans la plage de 12.000 à 50.000 g/mol et est utilisée en quantités de 5 à 7,5 % en masse.
